# EUROPEAN PATENT SPECIFICATION

(11) **EP 0 754 416 B1**
(45) Date of publication and mention of the grant of the patent: **07.11.2001**
(21) Application number: 96305293.1
(22) Date of filing: 19.07.1996
(51) Int. Cl.: A44B 18/00, C09J 7/04

(54) **Method of manufacturing a self-adhesive fastener**
Verfahren zur Herstellung eines selbstklebenden Verschlusses
Procédé de fabrication d'un système de fermeture auto-adhésif

(30) Priority: 21.07.1995 GB 9514987
(43) Date of publication of application: 22.01.1997
(73) Proprietor: YKK Europe Limited, London EC1V 8AN (GB)
(72) Inventor: Steinmetz, Klaus, 58553 Halver (DE); Kato, Hisanori, 60488 Frankfurt (DE)
(74) Representative: Luckhurst, Anthony Henry William

(56) References cited:
- FR-A- 2 199 954
- GB-A- 1 438 721
- US-A- 4 624 116

## Description

The present invention relates to a method of manufacturing a self-adhesive surface fastener, in particular to a hook and loop fastener, in which at least one of the parts has a pressure-sensitive adhesive coating on the base material for adhering the part to a substrate. Such materials are described in GB-A-1 441 328.

Existing hook and loop fasteners of this type use a hot melt adhesive. The hot melt adhesives are adversely affected by temperature variation and/or do not provide sufficient strength in some applications.

Organic solvent based adhesives pose environmental problems.

Thus, water based adhesives, as a solution or dispersion, are preferred because they are environmentally friendly and can offer high temperature resistance, up to 160°C in some formulations.

However, the advantages of the water based adhesives are offset by the production difficulties.

Typically, a surface fastener part is manufactured as a long roll. In the case of a hook and loop fastener, the hooks or loops, or mixed hooks and loops, are formed on a flexible polymer base material, as is well known in the art. If an aqueous based adhesive is applied to the back of the base material in a continuous process, the coated material must be run through a long path to give the adhesive sufficient time to dry. Attempts at speeding up the drying process impair the performance of the adhesive.

We have now realised that the water based adhesive can be applied in a plurality of layers to build up to the required layer thickness.

Thus, the present invention provides a method of manufacturing a self-adhesive part of a surface fastener, the part having a base material, and an adhesive coating being applied to the back of the base material, wherein the adhesive is a water based adhesive and is applied in a plurality of layers, and the adhesive is dried between the application of the successive layers.

Very preferably, the surface fastener is a hook and loop fastener.

Preferably, the adhesive is applied in three or more layers.

Unexpectedly, it has been found that the required overall drying time is reduced when the adhesive is applied in a plurality of layers, there is no adverse affect on the bonding of the adhesive to the base material, and the performance of the adhesive layer is not impaired.

The invention will be further described by way of example with reference to the accompanying drawings, in which,

Figures 1a and 1b show respective parts of a hook and loop fastener produced by the method of the invention,

Figure 2 shows an apparatus for performing the method of the invention.

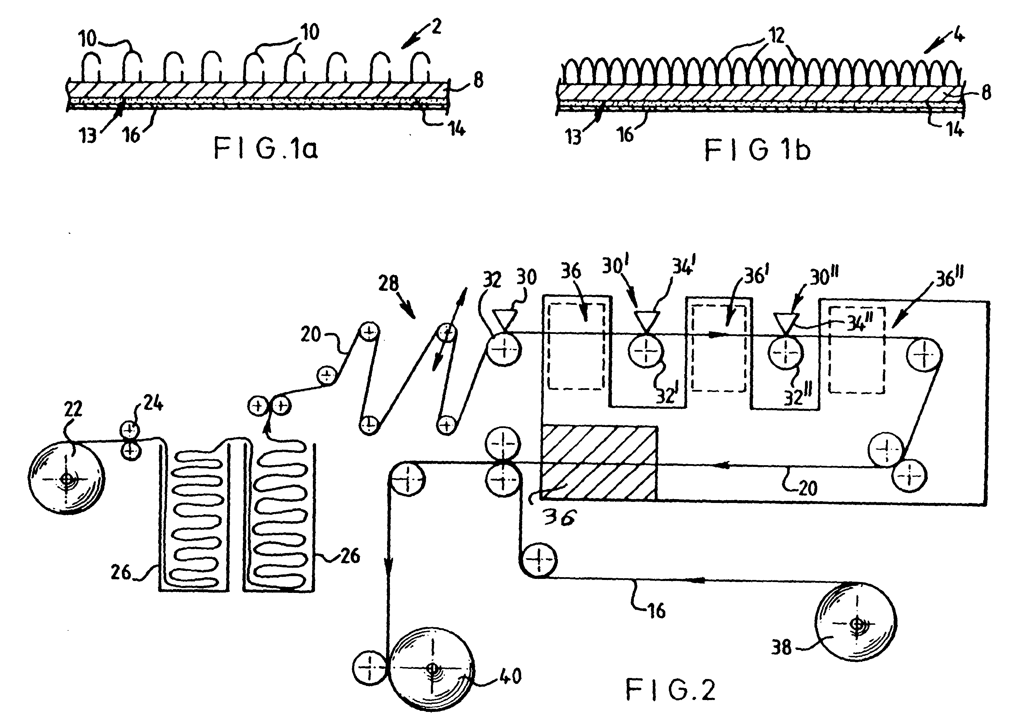

Figures 1a and 1b, which are not to scale, respectively show the hook part 2 and loop part 4 of a hook and loop fastener.

The parts 2, 4 formed as a continuous strip of material which can be cut to the required size and shape.

The base material 6, 8 depends on the particular application for the fastener and method of manufacture, as is well known in the art.

A typical hook part 2 comprises a flexible woven nylon or polypropylene base material 6 which is about 10 cm wide. Loops are woven into the material, and are then cut to form hooks 10. A typical loop part 4 has textile base material 8 with a loop pile 12. The base material may also be knitted.

As will be described more fully below, the back side 13 of the base material 6, 8 has a layer 14 of water based contact adhesive which is applied in a plurality of thin coats preferably three. A silicone paper 16 overlays the adhesive layer 14 to protect the adhesive layer 14 until the point of use.

Referring to Figure 2, a continuous strip 20 of hook or loop part is fed by rollers 24 from a large roll 22 into buffer containers 26. The strip 20 is fed via tensioning or take-up rollers 28 to a first coating station 30 which comprises a support roller 32 and a delivery nozzle for applying a thin layer of water based adhesive to the back 13 of the strip 20. The coated strip 20 is fed through a drying station 36 which may, for example, have infra red heaters for drying the water based adhesive. The strip 20 is then fed through second and third coating stations 30', 30" and drying stations 36', 36".

The coated and dried strip is then fed through a cooling station 38 and silicone paper 16, fed from a roll 38, is laid over the adhesive layer 14 and the finished strip 20 is wound onto a storage reel 40.

Typically, the adhesive is a dispersion of copolymer adhesive in water, and such dispersions may typically have about 35% by weight of water.

A suitable water based pressure sensitive adhesive is JOWATEX (trade mark) manufactured by Lobers und Frank GmbH & Co. KG of Detmold, Germany, such as JOWATEX 763 40, 763 60 and EP 70 4398.

The thickness of the adhesive layer will depend on the base material, the adhesive and the intended use, but a thickness of 200 to 300 grams per square metre is typical, and this is applied in three coats of about 80 grams per square metre.

## Claims

1. A method of manufacturing a self-adhesive part for a surface fastener, the part having a base material, and an adhesive coating being applied to the back of the base material **characterised in that** the adhesive is a water based adhesive and the adhesive is applied in a plurality of layers, and the adhesive is dried between the application of the successive layers.

2. A method as claimed in claim 1, wherein the adhesive is applied in at least three layers.

3. A method as claimed in claim 2, wherein the base material is woven or knitted.

4. A method as claimed in claim 1, 2 or 3, wherein the surface fastener is a hook and loop fastener.

## Patentansprüche

1. Verfahren zur Herstellung eines selbstklebenden Teiles für einen Flächenhaftverschluss, wobei der Teil ein Basismaterial und eine selbstklebende Beschichtung aufweist, die auf die Rückseite des Basismaterials aufgebracht wird, **dadurch gekennzeichnet, dass** der Klebstoff ein Wasser-basierter Klebstoff ist und in einer Mehrzahl von Lagen aufgebracht wird, und der Klebstoff zwischen dem Aufbringen der aufeinanderfolgenden Schichten getrocknet wird.

2. Verfahren nach Anspruch 1, bei welchem der Klebstoff in mindestens drei Schichten aufgebracht wird.

3. Verfahren nach Anspruch 2, bei welchem das Basismaterial gewebt oder gewirkt ist.

4. Verfahren nach Anspruch 1, 2 oder 3, bei welchem der Flächenhaftverschluss ein Haken-und-Schlingen-Verschluss ist.

## Revendications

1. Procédé de fabrication d'une partie auto-adhésive pour une fermeture contact, la partie ayant un matériau de base, et un revêtement adhésif étant appliqué au dos du matériau de base, **caractérisé en ce que** l'adhésif est un adhésif à base d'eau et l'adhésif est appliqué en une pluralité de couches, et l'adhésif est séché entre l'application des couches successives.

2. Procédé selon la revendication 1, dans lequel l'adhésif est appliqué en au moins trois couches.

3. Procédé selon la revendication 2, dans lequel le matériau de base est tissé ou tricoté.

4. Procédé selon 1a revendication 1, 2 ou 3, dans lequel la fermeture contact est une fermeture à crochets et à boucles.
